Europäisches Patentamt

European Patent Office

Office européen des brevets

(19)

(11) EP 0 676 881 B1

(12) FASCICULE DE BREVET EUROPEEN

(45) Date de publication et mention
de la délivrance du brevet:
28.05.2003 Bulletin 2003/22

(51) Int Cl.⁷: H04L 29/06

(21) Numéro de dépôt: 95400427.1

(22) Date de dépôt: 28.02.1995

(54) **Vérification d'intégrité de données échangées entre deux stations de réseau de télécommunications**

Prüfung der Echtheit von zwischen zwei Stationen eines Telecommunikationsnetz übertragenen Daten

Verification of the integrity of the data exchanged between two stations of a telecommunication network

(84) Etats contractants désignés:
DE GB

(30) Priorité: 11.03.1994 FR 9402964

(43) Date de publication de la demande:
11.10.1995 Bulletin 1995/41

(73) Titulaire: FRANCE TELECOM
75015 Paris (FR)

(72) Inventeurs:
• Rolin, Pierre
F-35510 Cesson Sevigne (FR)
• Gombault, Sylvain
F-35000 Rennes (FR)
• Toutain, Laurent
F-35000 Rennes (FR)

(74) Mandataire: Cabinet Martinet & Lapoux
BP 405
78055 Saint Quentin en Yvelines Cédex (FR)

(56) Documents cités:
EP-A- 0 554 182

• TELCOM REPORT, vol.15, no.6, Novembre 1992, MUNCHEN DE page 288, XP343334 W.KLASEN 'INFORMATIONSSICHERHEIT BEI DER KOPPLUNG LOKALER NETZE ÜBER WEITVERKEHRSNETZE'
• 1990 IEEE COMPUTER SOCIETY SYMPOSIUM ON RESEARCH IN SECURITY AND PRIVACY, 7 Mai 1990, OAKLAND, US pages 249 - 259, XP209256 R.RAMASWAMY 'A SECURITY ARCHITECTURE AND MECHANISM FOR DATA CONFIDENTIALITY IN TCP/IP PROTOCOLS'
• IEEE JOURNAL ON SELECTED AREAS IN COMMUNICATION., vol.7, no.4, Mai 1989, NEW YORK US pages 517 - 524, XP7972 C.MITCHELL ET AL 'CCITT/ISO STANDARDS FOR SECURE MESSAGE HANDLING'

# Description

La présente invention concerne de manière générale la protection et la sécurité de réseaux de télécommunications, notamment réseaux locaux (LAN pour Local Area Network en terminologie anglosaxonne). Plus particulièrement, l'invention a trait à une vérification d'intégrité de données échangées entre deux stations de télécommunications.

La multiplication des échanges de "données électroniques" entre entreprises a conduit les administrateurs de réseau local à définir une politique de sécurité et de protection de ces échanges, visant à détecter toute altération des données échangées. cette altération peut être accidentelle ou résulter d'une action de délinquance informatique par un tiers malintentionné. De façon beaucoup plus aisée et moins détectable que pour la transmission par courrier postal d'informations entre personnes, la transmission électronique de données entre usagers offre une possibilité d'altération de ces données, telle que perte, modification, insertion, ou suppression de données, pouvant résulter d'erreur de transmission ou de falsification volontaire.

La falsification par un tiers malintentionné de données transmises entre deux stations d'usager est relativement aisée. Elle consiste, par exemple, à connecter frauduleusement un moyen de traitement en série à la liaison reliant les deux stations entre lesquelles les données sont échangées, en instruisant le moyen de traitement des caractéristiques, telles qu'adresse réseau, etc., de l'une déterminée des deux stations. Le moyen de traitement ainsi configuré reçoit tout le trafic de données destiné à la station déterminée et modifie ce trafic de données en réémettant un trafic falsifié vers la station déterminée.

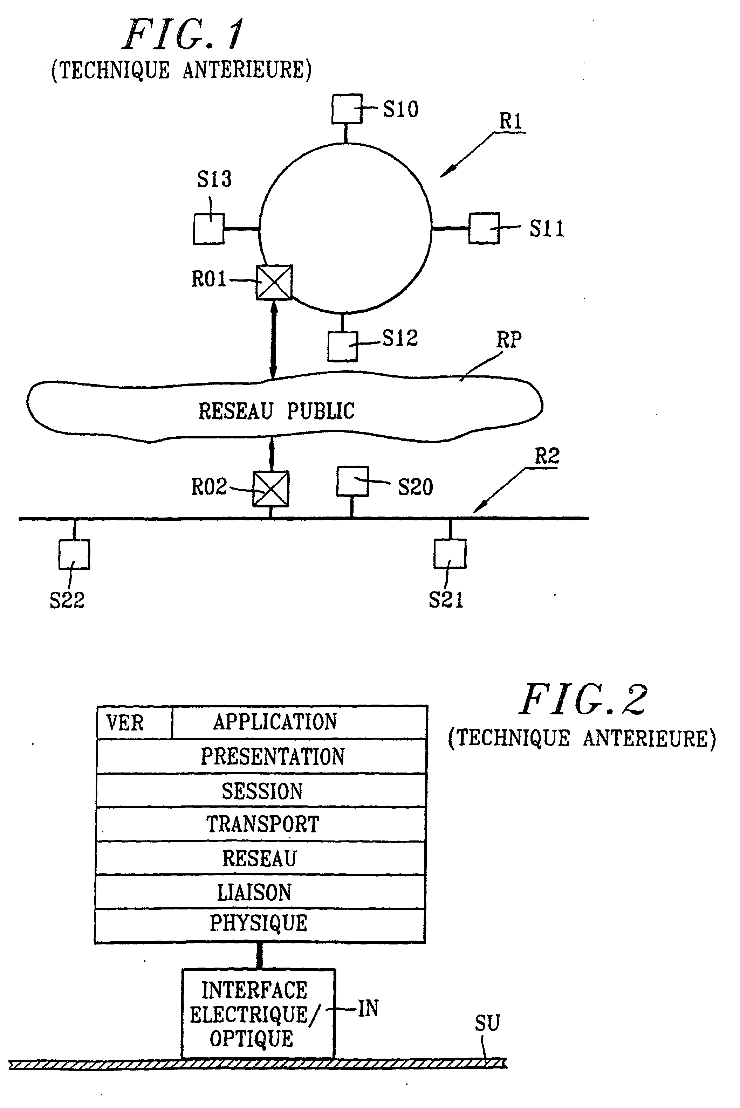

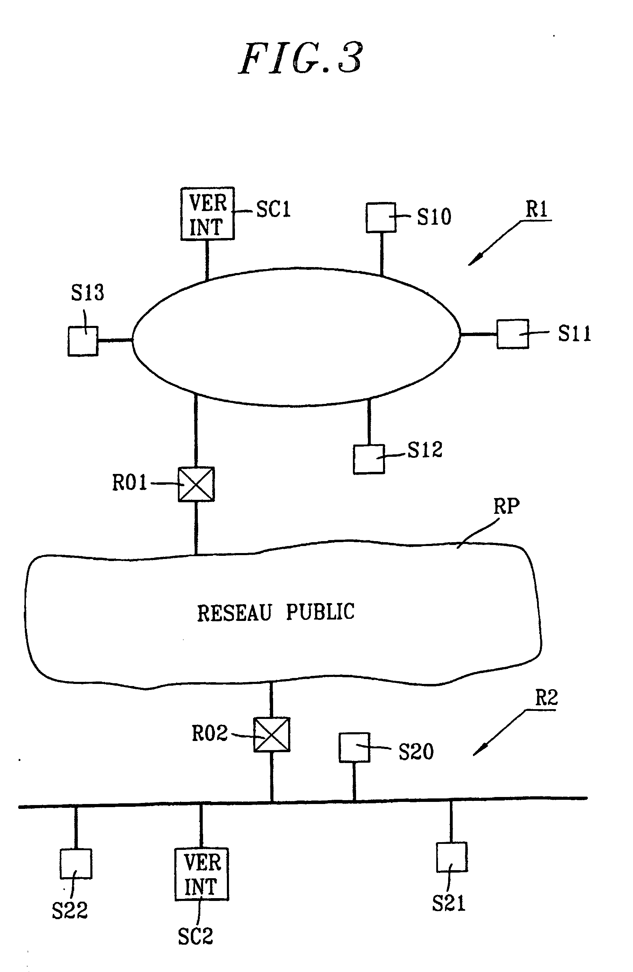

En référence aux figures 1 et 2 est maintenant présenté un procédé connu selon la technique antérieure pour la vérification d'intégrité de données échangées entre deux stations. La figure 1 montre deux réseaux locaux R1 et R2 interconnectés à travers un réseau public RP. Les réseaux R1 et R2 comprennent respectivement par exemple quatre stations S10 à S13 et trois stations S20 à S22, et sont structurés selon une topologie de type en anneau et une topologie de type bus respectivement. Les réseaux R1 et R2 sont interconnectés via le réseau public RP par deux routeurs, dits également passerelles, RO1 et RO2 respectivement associés aux réseaux R1 et R2.

Comme montré à la figure 2, chaque station dans les réseaux R1 et R2, telle que la station S10, est définie selon le modèle OSI (Open Systems Interconnection) de l'ISO (International Standardization Organization), par une pluralité de couches protocolaires de télécommunications, dites couches PHYSIQUE, LIAISON, RESEAU, TRANSPORT, SESSION, PRESENTATION et APPLICATION. Pour connecter la station S10 au réseau R1, la station S10 est munie d'une interface IN, électrique, optique ou même haute fréquence pour des liaisons hertziennes, assurant la liaison physique de la station S10 à un support de communication SU définissant la topologie du réseau R1.

Selon la technique antérieure, la mise en oeuvre d'une procédure de vérification d'intégrité dépend directement du moyen applicatif APPLICATION, avec lequel ladite procédure coexiste. Comme montré dans la figure 2, cela conduit à l'intégration d'un module de vérification d'intégrité VER dans le logiciel ou moyen applicatif APPLICATION. En pratique, le module de vérification d'intégrité VER peut être intégré dans un composant externe auquel fait appel le moyen applicatif. La vérification d'intégrité de données échangées entre deux stations, telles que la station S10 du réseau R1 et la station S20 du réseau R2, incluant toutes deux des modules compatibles de vérification d'intégrité implantés dans leur couche APPLICATION, est mise en oeuvre de la manière suivante.

Lorsqu'une station, par exemple la station S10, est prête à transmettre vers l'autre station, ici la station S20, une séquence de données pouvant consister en une trame ou un groupe de trames, la station S10 calcule préalablement ou fait calculer par le composant externe, en fonction de ladite séquence de données à transmettre, un premier sceau de chiffrement en utilisant un algorithme de chiffrement. Le premier sceau calculé est alors transmis avec la séquence vers la station S20. Sur réception dudit premier sceau et d'une séquence reçue correspondant à la séquence transmise à travers le réseau public RP, la station S20 calcule un second sceau en fonction de la séquence reçue suivant un algorithme de chiffrement identique à l'algorithme de chiffrement utilisé dans la station S10. Le second sceau calculé est comparé au premier sceau reçu dans la station S20. Une comparaison positive des sceaux signifie que l'intégrité des données transmises dans la séquence a été préservée. Inversement, une comparaison négative des sceaux signale à la station S20 une modification des données originales transmises par la station S10. La comparaison négative peut déclencher une alerte pour avertir l'usager de la station S20, ou une telle attaque à l'intégrité des données peut être identifiée, en ce qui concerne la liaison concernée, les stations d'origine et destinataire, etc.., et être mémorisée dans un fichier de sécurité de la station S20 pour être analysée ultérieurement.

Cette vérification d'intégrité selon la technique antérieure n'est cependant limitée qu'aux seules applications pour lesquelles est prévue une telle vérification. Cela signifie, en terme informatique, que pour une couche APPLICATION qui est dépourvue de module de vérification d'intégrité VER, une vérification d'intégrité des données transmises et reçues par l'application n'est pas possible.

Par ailleurs, le document I.E.E.E. Journal on Selected Areas in Communication, Vol.7, No.4, Mai 1989, New York US, pages 517 - 524, C. MITCHELL et al., intitulé : "CCITT/ISO Standards for Secure Message Handling", présente divers aspects de services de sécurité selon la Recommandation X400 du CCITT, parmi lesquels un service de vérification d'intégrité du contenu d'un message qui permet à l'émetteur d'un message de fournir un moyen par lequel les récepteurs du message peuvent vérifier que le contenu du message n'a pas été modifié. En particulier, ce document fait état d'un paramètre vérificateur d'intégrité qui est calculé en fonction du contenu du message à transmettre et qui est inclus avec les données du message à transmettre ; une clé secrète servant au calcul de ce paramètre peut être incluse dans le message.

L'invention vise à fournir des procédés de vérification d'intégrité, notamment destinés à être mis en oeuvre dans des réseaux locaux, selon lesquels la vérification d'intégrité est indépendante de la couche application et peut donc être mise en oeuvre pour tout échange de données, en mode connecté ou non connecté, sans nécessiter un développement particulier d'un module de vérification d'intégrité pour chaque application.

A cette fin, selon une première variante, un procédé de vérification d'intégrité de séquences de données transmises d'un premier moyen applicatif dans une première station vers un second moyen applicatif dans une seconde station dans un réseau au cours d'un échange de données entre lesdites première et seconde stations, comprenant pour chaque séquence de données transmise, les étapes de :

- calcul d'un premier sceau de chiffrement relatif à la séquence transmise par ledit premier moyen applicatif,
- calcul d'un second sceau de chiffrement relatif à une séquence reçue par ledit second moyen applicatif et correspondant à ladite séquence transmise, et
- comparaison desdits premier et second sceaux de chiffrement pour détecter une altération de ladite séquence reçue comparativement à ladite séquence transmise,

    est caractérisé en ce que

    ledit calcul du premier sceau de chiffrement est réalisé dans un moyen de contrôle distinct et indépendant desdits premier et second moyens applicatifs, en réponse à la réception d'une séquence correspondant à ladite séquence transmise, et est suivi par l'écriture du premier sceau de chiffrement dans une table de correspondance mémorisée dans le moyen de contrôle à une adresse égale à un premier mot d'identification de la séquence reçue et correspondant à la séquence transmise,

    ledit calcul du second sceau de chiffrement est réalisé dans ledit moyen de contrôle en réponse à la réception de ladite séquence reçue qui est retransmise par ledit second moyen applicatif, et

    ladite comparaison est réalisée dans ledit moyen de contrôle et est précédée par la recherche du premier sceau de chiffrement calculé en adressant en lecture ladite table de correspondance par un second mot d'identification de ladite séquence reçue qui est retransmis par ledit second moyen applicatif.

De préférence, à l'étape de comparaison succède, notamment lors d'un résultat de comparaison négatif, une transmission d'un résultat de comparaison dudit moyen de contrôle vers les premier et second moyens applicatifs.

La variante donnée ci-dessus ne considère que la vérification d'intégrité pour des échanges de données entre deux stations d'un même réseau. L'invention considère également la vérification d'intégrité de données échangées entre des applications dans des stations appartenant à des réseaux différents.

A cette fin, un procédé de vérification d'intégrité de séquences de données transmises d'un premier moyen applicatif dans une première station d'un premier réseau de diffusion vers un second moyen applicatif dans une seconde station d'un second réseau de diffusion lors d'un échange de données entre lesdites première et seconde stations, comprenant pour chaque séquence de données transmises, les étapes de

- calcul d'un premier sceau de chiffrement relatif à la séquence transmise par ledit premier moyen applicatif,
- calcul d'un second sceau de chiffrement relatif à une séquence reçue par ledit second moyen applicatif et correspondant à ladite séquence transmise, et
- comparaison desdits premier et second sceaux de chiffrement pour détecter une altération de ladite séquence reçue comparativement à ladite séquence transmise,

    est caractérisé en ce que

    lesdits calculs des premier et second sceaux de chiffrement sont réalisés dans des premier et second moyens de contrôle respectifs appartenant respectivement auxdits premier et second réseaux, et distincts desdits premier et second moyens applicatifs, lesdits premier et second sceaux étant calculés respectivement par le premier moyen de contrôle et le second moyen de contrôle en réponse à des réceptions de séquences correspondant à ladite séquence transmise,

    l'un desdits premier et second calculs est suivi par l'écriture du sceau de chiffrement calculé respectif dans une table de correspondance mémorisée dans l'un respectif des premier et second moyens de contrôle où ledit un desdits premier et second calculs est réalisé, à une adresse égale à un premier mot d'identification de la séquence reçue dans ledit un respectif des premier et second moyens de contrôle et correspondant à la séquence transmise, et .

    ladite comparaison est réalisée dans ledit un respectif desdits premier et second moyens de contrôle et est précédée par la recherche dudit sceau de chiffrement calculé respectif en adressant en lecture ladite table de correspondance en réponse à la réception d'un second mot d'identification de ladite séquence reçue par l'autre desdits premier et second moyens de contrôle et en réponse à la réception de l'autre des premier et second sceaux de chiffrement qui est transmis avec le second mot d'identification par l'autre desdits premier et second moyens de contrôle.

Le résultat de ladite comparaison peut être retransmis par ledit un des moyens de contrôle à destination de chacun desdits premier et second moyens applicatifs.

L'invention concerne également un réseau mettant en oeuvre la variante de procédé ci-dessus, dans lequel les premier et second moyen de contrôle sont inclus respectivement dans des routeurs des premier et second réseaux, et un réseau mettant en oeuvre les deux variantes du procédé selon l'invention, dans lequel un moyen de contrôle est inclus dans une station de réseau.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1, déjà commentée, est un bloc-diagramme de deux réseaux locaux interconnectés à travers un réseau public selon la technique antérieure;
- la figure 2, également déjà commentée, montre des moyens utiles à l'implantation d'une application communicante avec vérification d'intégrité dans une station de l'un des réseaux locaux de la figure 1;
- la figure 3 est un bloc-diagramme analogue à la figure 1, montrant deux réseaux locaux selon l'invention incluant chacun une station de contrôle indépendante des autres stations; et
- les figures 4A et 4B sont respectivement deux diagrammes temporels illustrant des étapes de procédé de vérification d'intégrité selon l'invention, pour des données échangées entre deux applications respectives implantées dans deux stations d'un même réseau et pour des données échangées entre deux applications implantées dans deux stations dans des réseaux différents.

La figure 3 montre deux réseaux locaux R1 et R2 incluant chacun une station de contrôle respective SC1, SC2, distincte et indépendante des autres stations S10-S13 du réseau R1 et S20-S22 du réseau R2. Selon le même exemple que dans la figure 1, les deux réseaux R1 et R2 sont interconnectés à travers le réseau public RP. Chaque réseau R1, R2 est connecté avec le réseau public RP par un routeur respectif R01, R02. Chaque station de contrôle SC1, SC2 met en oeuvre des fonctions relatives à la vérification d'intégrité pour chaque échange de données, en mode connecté ou non connecté, avec au moins l'une des stations S10-S13, S20-S22 dans le réseau respectif R1, R2. La station de contrôle SC1 assure d'une part, la vérification d'intégrité des données échangées entre deux stations dans le réseau respectif R1 et, d'autre part, la vérification d'intégrité des données échangées entre l'une des stations dans le réseau respectif R1 et une autre station quelconque dans un autre réseau quelconque, telle que la station S20 dans le réseau R2.

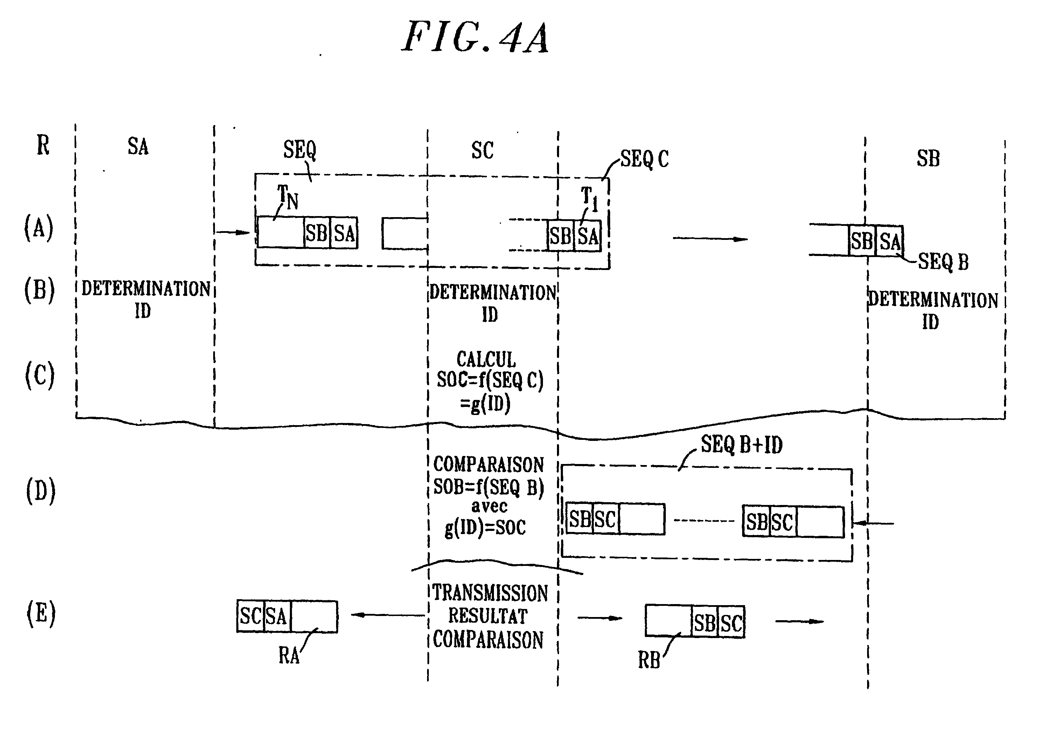

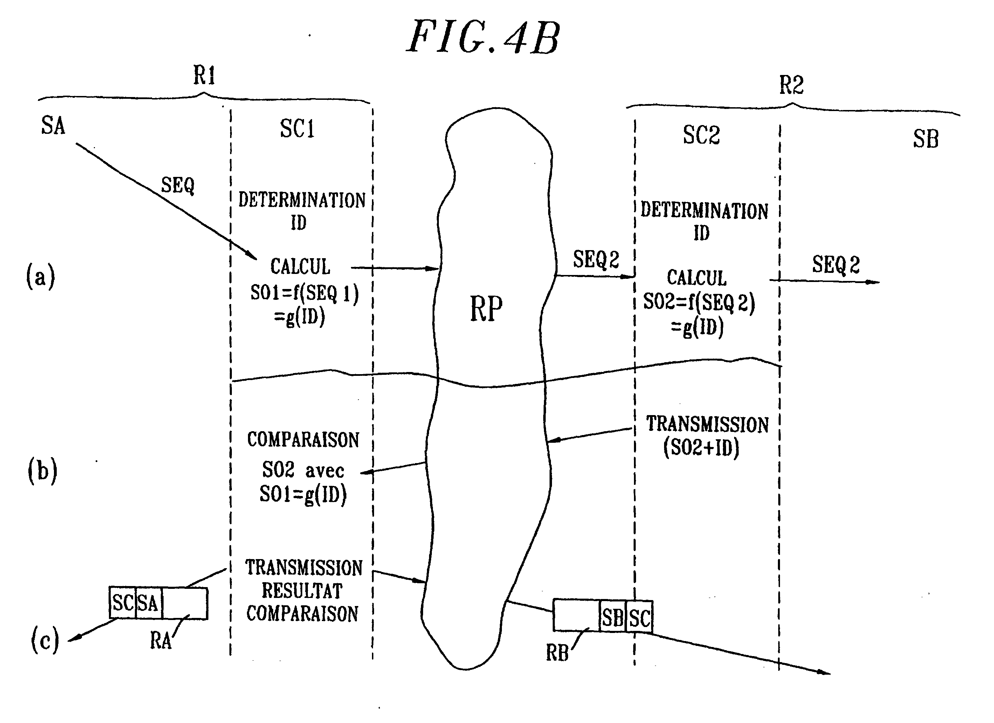

Ces deux modes de vérification d'intégrité sont appelés vérification d'intégrité intra-domaine et vérification d'intégrité inter-domaine puisqu'ils font intervenir respectivement un unique réseau et deux réseaux, et sont décrits plus en détail ci-après en référence aux figures 4A et 4B.

Il est à noter la différence fondamentale caractérisant un réseau selon l'invention comparativement à la technique antérieure. Une station, dite station de contrôle SC1, SC2, assure des fonctions de vérification d'intégrité pour n'importe quel échange de données depuis ou vers l'une quelconque application d'une quelconque station dans le réseau respectif, par contraste avec le développement spécifique d'un module de vérification d'intégrité VER (figure 2) inclus dans ou appelé par la couche APPLICATION dans au moins une station pour laquelle est souhaitée une telle procédure selon la technique antérieure.

La figure 4A illustre des étapes de procédé selon l'invention pour un mode de vérification d'intégrité intra-domaine, c'est-à-dire relatif à des échanges de données entre des applications APPLICATION respectives implantées dans deux stations d'un même réseau R1 ou R2.

Il est supposé dans la description qui suit de la figure 4A que l'intégrité de données est vérifiée dans une station de contrôle dénotée SC dudit même réseau dénoté R, et la vérification d'intégrité concerne un échange de données opéré entre deux stations dénotées SA et SB du réseau R. Il est en outre pris pour hypothèse que le réseau R auquel appartiennent à la fois les stations SA et SB et la station SC possède la propriété de diffusion. cette propriété de diffusion caractérise le fait qu'un élément d'information, tel que trame, transmis par l'une des stations est diffusé dans tout le support de communication, câble ou fibre optique, formant la topologie dudit réseau, et est potentiellement accessible par chacune des autres stations dans le réseau R. Cette propriété de diffusion est une caractéristique de tous les réseaux locaux, notamment les réseaux point-à-point ou point-à-multipoint. Il est à noter que le terme "trame" recouvre, dans la présente demande, les notions d'unité de données protocolaire PDU (Protocol Data Unit), paquet, message, etc..., selon le protocole mis en oeuvre.

Une unité élémentaire de données utile à la mise en oeuvre du procédé selon l'invention est appelée "séquence". Une séquence peut consister ou bien en une trame, ou paquet, transmis durant un échange de données, ou bien en un nombre donné N de trames successives $T_1$ à $T_N$ dans l'échange comme montré à l'étape A dans la figure 4A, ou bien encore en une portion de trame. A une séquence déterminée est associé un mot d'identification identifiant de façon univoque ladite séquence déterminée. Sachant qu'une séquence définit par exemple une trame ou une série de trames transmise entre deux stations au cours d'un échange de données, le mot d'identification de séquence peut consister en des première et seconde portions de mot d'identification identifiant de manière univoque la séquence. La première portion de mot d'identification identifie l'échange de données, sur la base par exemple de l'heure d'établissement de la communication pour un échange de données en mode connecté, des adresses des stations d'origine et destinataire des données échangées, etc., et la seconde portion de mot d'identification indique le rang de la séquence dans l'échange de données. D'autre éléments connus d'identification d'une séquence peuvent être inclus dans le mot d'identification.

Les étapes de procédé illustrées à la figure 4A sont maintenant décrites en détail. Lorsqu'une séquence de données SEQ est transmise d'une première application APPLICATION dans la première station SA à destination d'une seconde application APPLICATION dans la seconde station SB, et en raison des propriétés de diffusion du réseau auquel appartiennent les stations SA, SB et SC, cette séquence SEQ est reçue par la station de contrôle SC (étape A). L'application APPLICATION dans la station SA, en émission, l'application APPLICATION dans la station SB, en réception, et la station SC déterminent chacune un même mot d'identification ID de la séquence transmise SEQ, mot d'identification ID identifiant de manière univoque la séquence SEQ (étape B). En pratique, l'application dans la station SB, respectivement la station SC, détermine le mot d'identification ID en correspondance avec une séquence reçue SEQB, respectivement SEQC, pouvant être différente de la séquence transmise SEQ à cause d'une éventuelle altération de la séquence due à la transmission à travers le support de communication SU du réseau R. Outre la détermination du mot d'identification ID, un premier sceau SOC est calculé dans la station de contrôle SC (étape C) en fonction de la séquence SEQC reçue par la station de contrôle SC et au moyen d'un algorithme de chiffrement f, soit:

$$SOC = f(SEQC).$$

Ce premier sceau est associé au mot d'identification ID de la séquence en l'écrivant dans une table de correspondance mémorisée dans la station SC selon la relation : SOC = g(ID).

Ultérieurement à la réception par l'application APPLICATION dans la seconde station SB d'une séquence SEQB correspondant à la séquence SEQ, et à l'initiative de cette application dans la seconde station est déclenchée une vérification d'intégrité relative à la séquence SEQB (étape D). Ce déclenchement de vérification d'intégrité résulte de la transmission par la station SB à destination de la station SC de la séquence reçue SEQB et du mot d'identification ID de ladite séquence SEQB reçue par l'application APPLICATION dans la station SB. La station de contrôle SC calcule un second sceau de chiffrement SOB en fonction de la séquence SEQB suivant l'algorithme de chiffrement f, et recherche le premier sceau précédemment calculé SOC en adressant en lecture la table de correspondance par le mot d'identification ID transmis par l'application dans la station SB. La station SC compare ensuite les sceaux SOC et SOB respectivement lu et calculé. Une comparaison positive des sceaux exprime que l'intégrité de la séquence de données SEQ transmise a été préservée. Dans le cas contraire, la séquence SEQB reçue par la seconde station SB est indubitablement modifiée comparativement à celle SEQ transmise par l'application APPLICATION dans la première station SA.

Il est de préférence prévu, selon l'étape E, que la station de contrôle SC transmette à destination des applications APPLICATION dans les stations SA et SB des trames respectives RA et RB incluant le résultat de ladite comparaison. Comme montré à la figure 4A, chacune des trames RA et RB possède deux champs incluant les adresses réseau des stations correspondantes d'origine et de destination respectives. Il est à noter que les significations attribuées au terme "adresse" regroupent les notions de SAP (Service Access Point), de port, etc., selon les protocoles mis en oeuvre dans les stations.

En référence à la figure 4B, il est maintenant détaillé un procédé de vérification d'intégrité inter-domaine relatif à des données échangées entre deux applications APPLICATION de deux stations respectives, dénotées SA et SB, appartenant à deux réseaux de diffusion respectifs R1 et R2 interconnectés à travers un réseau public RP. Selon cette variante de l'invention, des stations de contrôle, dénotées SC1 et SC2, appartiennent respectivement aux réseaux R1 et R2.

Lorsque l'application APPLICATION dans la première station SA transmet une séquence de données SEQ à destination de l'application APPLICATION dans la seconde station SB, cette séquence SEQ est préalablement diffusée dans le réseau R1 auquel appartient la station SA avant d'être acheminée vers la station SB à travers le réseau public RP. Sur réception par la station de contrôle SC1 d'une séquence SEQ1 correspondant à cette séquence SEQ, la station SC1 détermine un mot d'identification ID de la séquence SEQ1 selon des critères identiques à ceux présentés précédemment (heure d'établissement de la communication entre les stations SA et SB, rang de la séquence dans la communication, etc.). Après cette détermination du mot ID est calculé (étape a), un premier sceau de chiffrement de séquence S01 en fonction de la séquence SEQ1 reçue dans la station SC1, obtenu selon un algorithme de chiffrement f. Le mot d'identification ID est associé au sceau S01 dans une table de correspondance mémorisée dans la station SC1:

$$SO1 = g(ID).$$

La séquence SEQ transmise par l'application APPLICATION de la première station SA du premier réseau R1 est reçue en une séquence SEQ2 par le second réseau R2 auquel appartient la seconde station SB. Selon l'étape b, la station de contrôle SC2 dans le second réseau R2 calcule, après détermination du mot d'identification ID, un second sceau S02 en fonction d'une séquence reçue SEQ2 correspondant à la séquence transmise SEQ et selon l'algorithme de chiffrement f également implanté dans la station SC1.

Ultérieurement à ces étapes de détermination de mot d'identification ID et de calcul des sceaux dans les deux stations de contrôle SC1 et SC2 débute une procédure de comparaison de sceaux selon l'étape b, à l'initiative de l'une quelconque des stations de contrôle. Selon l'illustration de la figure 4B, la seconde station de contrôle SC2 prend cette initiative en transmettant le sceau calculé SO2 et le mot d'identification ID de la séquence correspondante à destination de la station SC1.

Le mot ID et le sceau S02 sont reçus par la première station de contrôle SC1 qui compare le sceau SO2 que la station SC1 a reçu et le sceau correspondant SO1 que la station SC1 a précédemment calculé et qui est lu dans la table de correspondance à une adresse égale au mot d'identification ID reçu en provenance de la station SC2. Une comparaison négative exprime que la séquence SEQ2 a été altérée comparativement à la séquence SEQ=SEQ1. Dans le cas contraire, il est déduit que la séquence SEQ est identique à la séquence SEQ2.

Selon une étape c dans la figure 4B, le résultat de la comparaison peut être retransmis par la station SC1 à destination de la station SC2, et/ou sous la forme de trames respectives RA et RB à destination des applications APPLICATION dans les stations SA et SB.

Selon cette seconde variante montrée la figure 4B, les stations SC1 et SC2 peuvent être deux routeurs respectifs, dénotés RO1 et RO2 dans la figure 3, des réseaux R1 et R2 auxquels appartiennent les stations SA et SB. Chaque routeur RO1, RO2 constitue une interface entre le réseau local respectif R1, R2 et le réseau public et assure notamment une conversion de protocole pour les couches basses, typiquement les couches PHYSIQUE, LIAISON et RESEAU.

## Revendications

1. Procédé de vérification d'intégrité de séquences de données transmises d'un premier moyen applicatif (APPLICATION) dans une première station (SA) vers un second moyen applicatif (APPLICATION) dans une seconde station (SB) dans un réseau (R) au cours d'un échange de données entre lesdites première et seconde stations (SA,SB), comprenant pour chaque séquence de données transmise (SEQ), les étapes de :

   - calcul d'un premier sceau de chiffrement (SOC) relatif à la séquence transmise (SEQ) par ledit premier moyen applicatif,
   - calcul d'un second sceau de chiffrement (SOB) relatif à une séquence (SEQB) reçue par ledit second moyen applicatif et correspondant à ladite séquence transmise (SEQ), et
   - comparaison desdits premier et second sceaux de chiffrement (S0C, S0B) pour détecter une altération de ladite séquence reçue (SEQB) comparativement à ladite séquence transmise (SEQ),

   **caractérisé en ce que**
   ledit calcul du premier sceau de chiffrement (SOC) est réalisé dans un moyen de contrôle (SC) distinct et indépendant desdits premier et second moyens applicatifs, en réponse à la réception d'une séquence (SEQC) correspondant à ladite séquence transmise (SEQ), et est suivi par l'écriture du premier sceau de chiffrement (SOC) dans une table de correspondance mémorisée dans le moyen de contrôle à une adresse égale à un premier mot d'identification (ID) de la séquence reçue (SEQC) et correspondant à la séquence transmise,
   ledit calcul du second sceau de chiffrement (SOB) est réalisé dans ledit moyen de contrôle (SC) en réponse à la réception de ladite séquence reçue (SEQB) qui est retransmise par ledit second moyen applicatif, et
   ladite comparaison est réalisée dans ledit moyen de contrôle (SC) et est précédée par la recherche du premier sceau de chiffrement calculé (SOC) en adressant en lecture ladite table de correspondance par un second mot d'identification (ID) de ladite séquence reçue (SEQB) qui est retransmis par ledit second moyen applicatif.

2. Procédé conforme à la revendication 1, **caractérisé en ce qu'**à ladite étape de comparaison succède, notamment lors d'un résultat de comparaison négatif, une transmission d'un résultat de comparaison dudit moyen de contrôle (SC) vers les première et seconde stations (SA, SB).

3. Procédé de vérification d'intégrité de séquences de données transmises d'un premier moyen applicatif dans une première station (SA) d'un premier réseau de diffusion (R1) vers un second moyen applicatif dans une seconde station (SB) d'un second réseau de diffusion (R2) lors d'un échange de données entre lesdites première et seconde stations (SA,SB), comprenant pour chaque séquence de données transmise (SEQ), les étapes de :

- calcul d'un premier sceau de chiffrement (SO1) relatif à la séquence transmise (SEQ) par ledit premier moyen applicatif,
- calcul d'un second sceau de chiffrement (SO2) relatif à une séquence (SEQ2) reçue par ledit second moyen applicatif et correspondant à ladite séquence transmise (SEQ), et
- comparaison desdits premier et second sceaux de chiffrement (SO1,SO2) pour détecter une altération de ladite séquence reçue (SEQ2) comparativement à ladite séquence transmise (SEQ),

    **caractérisé en ce que**

lesdits calculs des premier et second sceaux de chiffrement (SO1, SO2) sont réalisés dans des premier et second moyens de contrôle respectifs (SC1, SC2) appartenant respectivement auxdits premier et second réseaux (R1, R2), et distincts desdits premier et second moyens applicatifs, lesdits premier et second sceaux (SO1, SO2) étant calculés respectivement par le premier moyen de contrôle et le second moyen de contrôle en réponse à des réceptions de séquences (SEQ1, SEQ2) correspondant à ladite séquence transmise (SEQ),

l'un desdits premier et second calculs est suivi par l'écriture du sceau de chiffrement calculé respectif (SO1) dans une table de correspondance mémorisée dans l'un respectif (SC1) des premier et second moyens de contrôle où ledit un desdits premier et second calculs est réalisé, à une adresse égale à un premier mot d'identification (ID) de la séquence (SEQ1) reçue dans ledit un respectif (SC1) des premier et second moyens de contrôle et correspondant à la séquence transmise, et

ladite comparaison est réalisée dans ledit un respectif (SC1) desdits premier et second moyens de contrôle et est précédée par la recherche dudit sceau de chiffrement calculé respectif (SO1) en adressant en lecture ladite table de correspondance en réponse à la réception d'un second mot d'identification (ID) de ladite séquence reçue par l'autre (SC2) desdits premier et second moyens de contrôle et en réponse à la réception de l'autre (SO2) des premier et second sceaux de chiffrement qui est transmis avec le second mot d'identification par l'autre (SC2) desdits premier et second moyens de contrôle.

4. Procédé conforme à la revendication 3, **caractérisé par** la transmission d'un résultat de ladite comparaison par ledit un (SC1) des moyens de contrôle vers lesdits premier et second moyens applicatifs.

5. Réseau de diffusion, composé de premier et second réseaux de diffusion, comprenant les moyens pour mettre en oeuvre toutes les étapes du procédé conforme à la revendication 3 ou 4, **caractérisé en ce que** lesdits premier et second moyens de contrôle (SC1, SC2) sont inclus respectivement dans des routeurs (RO1, RO2) desdits premier et second réseaux de diffusion (R1, R2).

6. Réseau de diffusion comprenant les moyens pour mettre en oeuvre toutes les étapes d'un procédé conforme à l'une quelconque des revendications 1 à 4, **caractérisé en ce qu'**un moyen de contrôle est inclus dans une station (SC;SC1) de réseau (R;R1).

**Patentansprüche**

1. Verfahren zur Verifizierung der Integrität von Datenfolgen, die von einem ersten Anwendungsmittel (APPLICATION) in einer ersten Station (SA) zu einem zweiten Anwendungsmittel (APPLICATION) in einer zweiten Station (SB) in einem Netz (R) im Verlauf eines Datenaustausches zwischen der ersten und der zweiten Station (SA, SB) übertragen werden, umfassend für jede übertragene Datenfolge (SEQ) die Schritte:

- Berechnung eines ersten Chiffrierungssiegels (SOC) bezüglich der von dem ersten Anwendungsmittel übertragenen Folge (SEQ),
- Berechnung eines zweiten Chiffrierungssiegels (SOB) bezüglich einer von dem zweiten Anwendungsmittel empfangenen Folge (SEQB) und entsprechend der übertragenen Folge (SEQ),
- Vergleich des ersten und des zweiten Chiffrierungssiegels (SOC, SOB), um eine Veränderung der empfangenen Folge (SEQB) im Vergleich mit der übertragenen Folge (SEQ) festzustellen,

    **dadurch gekennzeichnet, daß**

die Berechnung des ersten Chiffrierungssiegels (S0C) in einem von dem ersten und dem zweiten Anwendumgsmittel verschiedenen und unabhängigen Kontrollmittel (SC) in Antwort auf den Empfang einer Folge (SEQC) entsprechend der übertragenen Folge (SEQ) ausgeführt wird und auf sie das Schreiben des ersten Chiffrierungsschlüssels (SOC) in eine Zuordnungstabelle folgt, die in dem Kontrollmittel bei einer Adresse gleich einem ersten Identifizierungswort (ID) für die empfangene Folge (SEQC) und entsprechend der übertragenen Folge gespeichert ist,

die Berechnung des zweiten Chiffrierungssiegels (SOB) in dem Kontrollmittel (SC) in Antwort auf den Empfang der empfangenen Folge (SEQB) ausgeführt wird, die durch das zweiten Anwendungsmittel rückübertragen wird, und

der Vergleich in dem Kontrollmittel (SC) ausgeführt wird und ihm die Suche nach dem berechneten ersten Chiffrierungssiegel (SOC) vorausgeht, wobei beim Lesen die Zuordnungstabelle durch ein zweites Identifizierungswort (ID) der empfangenen Folge (SEQB) adressiert wird, die durch das zweite Anwendungsmittel rückübertragen wird.

2. Verfahren nach Anspruch 1, **dadurch gekennzeichnet, daß** auf den Vergleichsschritt, insbesondere anläßlich eines negativen Vergleichsergebnisses, eine Übertragung eines Vergleichsergebnisses des Kontollmittels (SC) zu der ersten und der zweiten Station folgt.

3. Verfahren zur Verifizierung der Integrität von Datenfolgen, die von einem ersten Anwendungsmittel in einer ersten Station (SA) eines ersten Sendenetzes (R1) zu einem zweiten Anwendungsmittel in einer zweiten Station (SB) eines zweiten Sendenetzes (R2) anläßlich eines Datenaustausches zwischen der ersten und der zweiten Station (SA, SB) übertragen werden, umfassend für jede übertragene Datenfolge (SEQ) die Schritte:

- Berechnung eines ersten Chiffrierungssiegels (SO1) bezüglich der von dem ersten Anwendungsmittel übertragenen Folge (SEQ),
- Berechnung eines zweiten Chiffrierungssiegels (SO2) bezüglich einer von dem zweiten Anwendungsmittel empfangenen Folge (SEQ2) und entsprechend der übertragenen Folge (SEQ),
- Vergleich des ersten und des zweiten Chiffrierungssiegels (SO1, SO2), um eine Veränderung der empfangenen Folge (SEQ2) im Vergleich mit der übertragenen Folge (SEQ) festzustellen,

  **dadurch gekennzeichnet, daß**

die Berechnungen des ersten und des zweiten Chiffrierungssiegels (SO1, S02) in ersten und zweiten entsprechenden Kontrollmitteln (SC1, SC2) ausgeführt werden, die jeweils zu dem ersten und dem zweiten Netz (R1, R2) gehören und von dem ersten und dem zweiten Anwendungsmittel verschieden sind, wobei das erste und das zweite Siegel (SO1, SO2) jeweils durch das erste Kontrollmittel und das zweite Kontrollmittel in Antwort auf den Empfang von Folgen (SEQ1, SEQ2) entsprechend der übertragenen Folge (SEQ) berechnet werden,

auf die erste und die zweite Berechnung das Schreiben des jeweiligen berechneten Chiffrierungssiegels (SO1) in eine in dem einen entsprechenden (SC1) von dem ersten und dem zweiten Kontrollmittel, in dem die besagte eine von der ersten und der zweiten Berechnung ausgeführt wird, gespeicherte Zuordnungstabelle folgt bei einer Adresse gleich einem ersten Identifizierungswort (ID) für die Folge (SEQ1), die in dem besagten einen entsprechenden (SC1) von dem ersten und dem zweiten Kontrollmittel empfangen worden ist, und entsprechend der übertragenen Folge,

der Vergleich in dem besagten einen entsprechenden (SC1) von dem ersten und dem zweiten Kontrollmittel ausgeführt wird und ihm die Suche nach dem entsprechenden berechneten Chiffrierungssiegel (SC1) vorausgeht, wobei beim Lesen die Zuordnungstabelle in Antwort auf den Empfang eines zweiten Identifizierungswortes (ID) der Folge, die von dem anderen (SC2) von dem ersten und dem zweiten Kontrollmittel empfangen worden ist, und in Antwort auf den Empfang des anderen (S02) von dem ersten und dem zweiten Chiffrierungssiegel, das mit dem zweiten Identifizierungswort durch das andere (SC2) von dem ersten und dem zweiten Kontrollmittel übertragen worden ist.

4. Verfahren nach Anspruch 3, **gekennzeichnet durch** die Übertragung eines Ergebnisses des Vergleichs **durch** das besagte eine (SC1) der Kontrollmittel zu dem ersten und dem zweiten Anwendungsmittel.

5. Sendenetz, bestehend aus ersten und zweiten Sendenetzen, umfassend die Mittel zur Ausführung sämtlicher Schritte des Verfahrens nach Anspruch 3 oder 4, **dadurch gekennzeichnet, daß** das erste und das zweite Kontrollmittel (SC1, SC2) jeweils in Routern (RO1, RO2) der ersten und der zweiten Sendenetze (R1, R2) enthalten sind.

6. Sendenetz, umfassend die Mittel zur Durchführung sämtlicher Schritte eines Verfahrens nach einem beliebigen der Ansprüche 1 bis 4, **dadurch gekennzeichnet, daß** ein Kontrollmittel in einer Station (SC; SC1) des Netzes (R; R1) enthalten ist.

**Claims**

1. A method of verifying the integrity of data sequences transmitted from a first application means (APPLICATION) in a first station (SA) to a second application means (APPLICATION) in a second station (SB) in a network (R) during an exchange of data between said first and second station (SA,SB), comprising for each transmitted data sequence (SEQ) the steps of:

- calculation of a first encipherment seal (SOC) relating to the transmitted sequence (SEQ) from said first application means,

- calculation of a second encipherment seal (SOB) relating to a sequence (SEBQ) received by said second application means and corresponding to said transmitted sequence (SEQ), and

- comparison of said first and second encipherment seals (SOC, SOB) to detect any alteration of said received sequence (SEQB) in comparison with said transmitted sequence (SEQ),

**characterized in that**

said calculation of the first encipherment seal (SOC) is carried out in a control means (SC) separate from and independent of said first and second application means, in response to reception of a sequence (SEQC) corresponding to said transmitted sequence (SEQ), and is followed by writing of the first encipherment seal (SOC) in a mapping table stored in the control means at an address equal to a first identification word (ID) of the received sequence (SEQC) and corresponding to the transmitted sequence,

said calculation of the second encipherment seal (SOC) is carried out in said control means (SC) in response to reception of said received sequence (SEQB) retransmitted by said second application means and

said comparison is carried out in said second control means (SC) and is preceded by searching for the first calculated encipherment seal (SOC) by read-addressing said mapping table by a second identification word (ID) of said received sequence (SEQB) which is retransmitted by said second application means.

2. The method according to claim 1, **characterized in that** said comparison step is followed by transmission of a comparison result from said control means (SC) to the first and second stations (SA, SB), in particular in the event of a negative comparison result.

3. A method of verifying the integrity of data sequences transmitted from a first application means in a first station (SA) of a first broadcast network (R1) to a second application means in a second station (SB) of a second broadcast network (R2) during an exchange of data between said first and second stations (SA, SB), comprising for each transmitted data sequence (SEQ), the steps of:

- calculation of a first encipherment seal (SO1) relating to the transmitted sequence (SEQ) from said first application means,

- calculation of a second encipherment seal (S02) relating to a sequence (SEQ2) received by said second application means and corresponding to said transmitted sequence (SEQ), and

- comparison of said first and second encipherment seals (SO1, SO2) to detect any alteration of said received sequence (SEQ2) in comparison with said transmitted sequence (SEQ),

**characterized in that**

said calculations of first and second encipherment seals (SO1, SO2) are carried out in respective first and second control means (SC1, SC2) belonging respectively to said first and second networks (R1, R2), and separate from said first and second application means, said first and second seals (SO1, SO2) being respectively calculated by the first control means and the second control means in response to receptions of sequences (SEQ1, SEQ2) corresponding to said transmitted sequence (SEQ),

one of said first and second calculations is followed by the writing of the respective calculated encipherment seal (SO1) in a mapping table stored in respective one (SC1) of the first and second control means in which said one of said first and second calculations is carried out, at an address equal to a first identification word (ID) of the sequence (SEQ1) received in said respective one (SC1) of said first and second control means and corresponding to the transmitted sequence, and

said comparison is carried out in said respective one (SC1) of said first and second control means and is preceded by searching for said respective calculated encipherment seal (SO1) by read-addressing said mapping table in response to reception of a second identification word (ID) of said sequence received by the other (SO2) of said first and second control means and in response to the reception of the other (SC2) of the first and second encipherment seals which is transmitted with the second identification word by the other (SC2) of said first and second control means.

4. The method according to claim 3, **characterized by** transmitting a result of said comparison from said one (SC1) of the control means to said first and second application means.

5. Broadcast network, consisting of first and second broadcast networks, comprising the means for implementing all the steps of the method according to claim 3 or 4, **characterized in that** said first and second control means (SC1, SC2) are respectively included in routers (RO1, RO2) of said first and second broadcast networks (R1, R2).

6. Broadcast network comprising the means for implementing all the steps of a method according to any one of claims 1 to 4, **characterized in that** a control means is included in a station (SC;SC1) of network (R;R1).

## FIG.1
### (TECHNIQUE ANTERIEURE)

## FIG.2
### (TECHNIQUE ANTERIEURE)

# FIG.3

RESEAU PUBLIC

# FIG.4A

R SA SEQ SC SEQ C SB

(A) T_N SB SA SB SA SB SA — SEQ B
T_1

(B) DETERMINATION ID | DETERMINATION ID | DETERMINATION ID

(C) CALCUL SOC=f(SEQ C) =g(ID)

SEQ B+ID

(D) COMPARAISON SOB=f(SEQ B) avec g(ID)=SOC | SB SC ------- SB SC

(E) SC SA ← TRANSMISSION RESULTAT COMPARAISON → SB SC →
RA RB

EP 0 676 881 B1

# FIG.4B

R1 · R2

SA · SC1 · SC2 · SB

(a)

SEQ

DETERMINATION ID

CALCUL
SO1=f(SEQ 1)
=g(ID)

RP

SEQ2

DETERMINATION ID

CALCUL
SO2=f(SEQ 2)
=g(ID)

SEQ2

(b)

COMPARAISON
SO2 avec
SO1=g(ID)

TRANSMISSION
(SO2+ID)

(c)

TRANSMISSION
RESULTAT
COMPARAISON

SC SA

RA

SB SC

RB